# EUROPEAN PATENT APPLICATION

(11) **EP 2 711 844 A1**
(43) Date of publication of application: **26.03.2014**
(21) Application number: 13185103.2
(22) Date of filing: 19.09.2013
(51) Int. Cl.: G06F 13/40, H01R 13/64

(54) **Detection circuit for flexible printed circuit connection integrity**

(30) Priority: 20.09.2012 SG 201207000
(71) Applicant: Rockwell Automation Asia Pacific Business Ctr. Pte., Ltd., Singapore 618494 (SG); Delta Electronics, Taoyuan-City (Taoyuan County) 33068 (TW)
(72) Inventor: Melvin, Yap Yang Yueng, 509485 Singapore (SG); Miles, Scott, Belgium, WI 53004 (US); Teng, Chiu-Ju, 237 New Taipei City (TW); Chang, Chih Wei, 334 Bade City (Taoyuan County) (TW); Yang, ChingChi, 333 Gueishan Township (Taoyuan County ) (TW)
(74) Representative: Grünecker, Kinkeldey, Stockmair & Schwanhäusser

(57) **Abstract**

Provided is a connection detector assembly for detecting a connected state between a keypad and a processor along a flexible circuit. The assembly comprises a keypad with a plurality of buttons, each button including button contacts. A flexible printed circuit having a plurality of electrical traces aligned along a width of the flexible printed circuit and includes a set of two or more button signal traces individually electrically coupled with a first button contact of a corresponding one of the plurality of buttons. A first diagnostic electrical trace and a second diagnostic electrical trace form a diagnostic circuit with one another. A receiving unit receives the flexible printed circuit, A processor electrically couples to the diagnostic electrical circuit performs a diagnostic check of the diagnostic circuit to determine a connected state, the connected state indicating whether or not a failure condition exists along a designated portion of the diagnostic circuit.

## Description

### FIELD OF THE INVENTION

The present disclosure relates generally to the field of device connections and more specifically to an assembly for detecting a connection integrity between an electric device and a receiving unit device. This disclosure is particularly related to connection detection of a flexible printed circuit extending from a keypad membrane that is inserted into a printed circuit board connector.

### BACKGROUND

Conventionally, peripheral electronic devices communicate with computing systems by various types of electrical power and data transfer elements such as cables, wires, buses, traces, slots, etc. In a system such as a motor controller, a peripheral electronic device such as a keypad membrane is electrically connected to a printed circuit board of the motor controller to transfer signals between the keypad and the controller. In this instance, the electrical signals can be transferred over a data transfer element such as a flexible printed circuit between the motor controller and the keypad. The flexible printed circuit can include a plurality of electrical traces that can be connected to the printed circuit board associated with the motor controller. To facilitate a proper connection with the motor controller, the electrical traces maintain sufficient contact with corresponding electrical pins disposed on the printed circuit board that are adapted to electrically communicate with the controller,

Many known connection types incorporate mechanical fasteners along with other structural members to rigidly support and maintain sufficient contact between the electrical traces and the electrical pins. Descriptions of connection detector applications are found in US patents 8,112,568 by Ely et al., 7,391,334 by Miyake et al., 6,149,464 to DeBauche et al., and 6,368,155 by Bassler et al., which are incorporated herein by reference. These disclosures each require a specialized feature such as a mechanical fastener, a complex electrical connection and/or an advanced circuit configuration to facilitate the detection of each device connection status. However, these specialized features may be inflexible, take up too much space and/or require additional costs that are undesirable. Additionally, they may not be able to detect if a connection has failed or has become disconnected during the product lifetime. In a membrane keypad application, these designs will not allow a user to know if the keypad buttons are working until it is pressed and found to be non-responsive.

Therefore, there is a need to provide a connection detector assembly and method that is configured to detect connection integrity between a peripheral electric device such as a membrane keypad and a receiving unit for electrical communication therebetween that reduces reliance on rigid structural members and also avoids the additional costs incurred through the use of specialized features.

### SUMMARY

One or more aspects of the disclosure are now summarized to facilitate a basic understanding of the disclosure, wherein this summary is not an extensive overview of the disclosure, and is intended neither to identify certain elements of the disclosure, nor to delineate the scope thereof. The primary purpose of the summary, rather, is to present some concepts of the disclosure in a simplified form prior to the more detailed description that is presented hereinafter. The present disclosure relates to improvements in connection detection assemblies for identifying a connection integrity or state of an electronic device and a receiving unit on a printed circuit board.

In accordance with one or more aspects of the disclosure, a connection detector assembly for detecting a connected state between a keypad and a processor is provided. The assembly comprises a keypad with a plurality of buttons, each button including first and second button contacts. A flexible printed circuit having opposite first and second ends is included, where the second end is connected to the keypad, and a plurality of spaced electrical traces extend longitudinally between the first and second ends of the flexible printed circuit. The electrical traces are aligned along a width of the flexible printed circuit and include a set of two or more button signal traces individually electrically coupled with a first button contact of a corresponding one of the plurality of buttons. A first diagnostic electrical trace and a second diagnostic electrical trace form a diagnostic circuit with one another.

A receiving unit is configured to receive the first end of the flexible printed circuit and includes a plurality of electrical contacts configured to electrically couple to the electrical traces along the width of the flexible printed circuit. The electrical contacts include one or more diagnostic electrical contacts configured to electrically couple to the diagnostic trace. A processor is electrically coupled to the one or more diagnostic electrical contacts of the receiving unit. The processor performs a diagnostic check of the diagnostic circuit to determine a connected state between the first end of the flexible printed circuit and the receiving unit or between the second end of the flexible printed circuit and the keypad, the connected state indicates whether or not a failure condition exists along a designated portion of the diagnostic circuit.

In certain embodiments, a ground voltage is introduced to the first diagnostic electrical trace and a power supply voltage is introduced to the second diagnostic electrical trace. The processor compares a voltage difference across the diagnostic circuit to determine if the connection state includes a failure condition between the receiving unit and the flexible printed circuit.

### BRIEF DESCRIPTION OF THE DRAWINGS

The following description and drawings set forth certain illustrative implementations of the disclosure in detail, which are indicative of several exemplary ways in which the principles of the disclosure may be carried out. The illustrated examples, however, are not exhaustive of the many possible embodiments of the disclosure. Other objects, advantages and novel features of the disclosure will be appreciated from the following detailed description of the disclosure when considered in conjunction with the drawings, in which:
FIGURE 1 is a top plan view illustrating a connection detector assembly for detecting a connected state between a keypad and a receiving unit with a flexible printed circuit in accordance with one or more aspects of the present disclosure;
FIGURE 2 is a partial top schematic view of the connection detector assembly of FIGURE 1 illustrating a diagnostic circuit and an electrical connection between the flexible printed circuit, the keypad and a plurality of buttons located thereon;
FIGURES 3 and 4 are cross-sectional end views of the flexible printed circuit of FIGURE 2 illustrating a plurality of electrical traces located thereon;
FIGURE 5 is perspective view showing a portion of the flexible printed circuit of FIGURES 2, 3 and 4;
FIGURE 6 is a schematic diagram illustrating an electrical circuit in the connection detector assembly of FIGURES 1 and 2 showing an embodiment of the diagnostic circuit configured to detect a connection state between the keypad and a processor;
FIGURE 7 is a top plan view of the flexible printed circuit of FIGURE 1 illustrating a partial schematic diagram of a diagnostic circuit of the flexible printed circuit in a connected state;
FIGURE 8 is a top plan view of the flexible printed circuit of FIGURES 1 and 7 illustrating a partial schematic diagram of the diagnostic circuit of the flexible printed circuit in a partially disconnected state due to angular misalignment;
FIGURES 9 and 10 are top plan views of the flexible printed circuit of FIGURE 1 illustrating an alternate embodiment of the diagnostic circuit having short electrical traces;
FIGURE 11 is a schematic diagram illustrating the connection detector assembly of FIGURE 1 including an alternate embodiment of the diagnostic circuit and the electrical connection between the flexible printed circuit, the keypad and a plurality of buttons located thereon;
FIGURE 12 is a schematic plan view of the electrical circuit FIGURES 1 and 11 illustrating another embodiment of the diagnostic circuit configured to detect a connection state between the keypad and the processor; and
FIGURE 13 is a schematic diagram illustrating the connection detector assembly of FIGURE 1 including an alternate embodiment of the diagnostic circuit and the electrical connection between the flexible printed circuit, the keypad and a plurality of buttons located thereon.

### DETAILED DESCRIPTION

Referring now to the figures, several embodiments or implementations are hereinafter described in conjunction with the drawings, where like reference numerals are used to refer to like elements throughout, and where the various features are not necessarily drawn to scale. The present disclosure provides a connection detection assembly **10** that is configured to detect the integrity of a connection state between a peripheral electrical device and a processor or controller. The disclosed approaches may be advantageously employed to reduce the need for rigid structural elements and mechanical fasteners to provide a sufficient connection state. Additionally, the disclosed assemblies include a simple electrical structure that does not require specialized features such as a complex electrical connection and/or an advanced circuit configuration to adequately detect the integrity of the connection state.

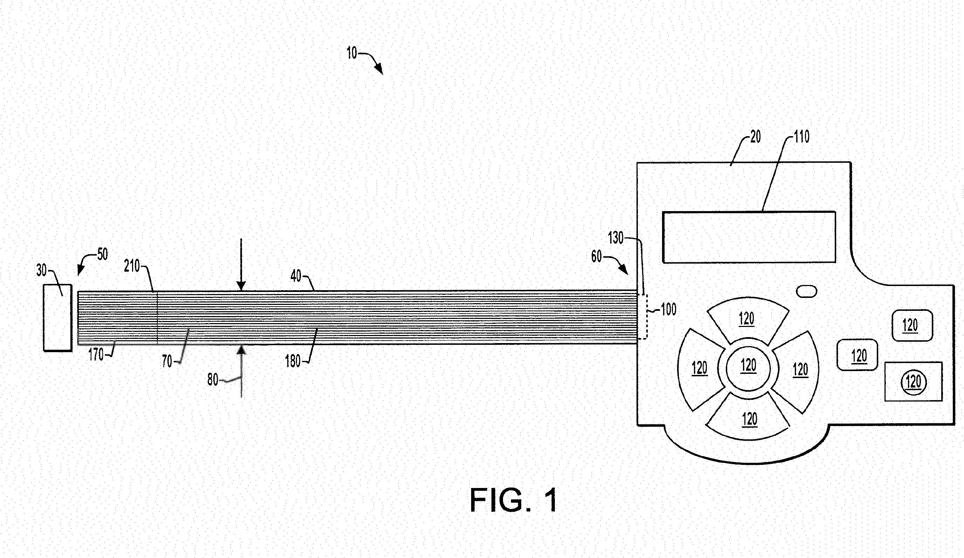

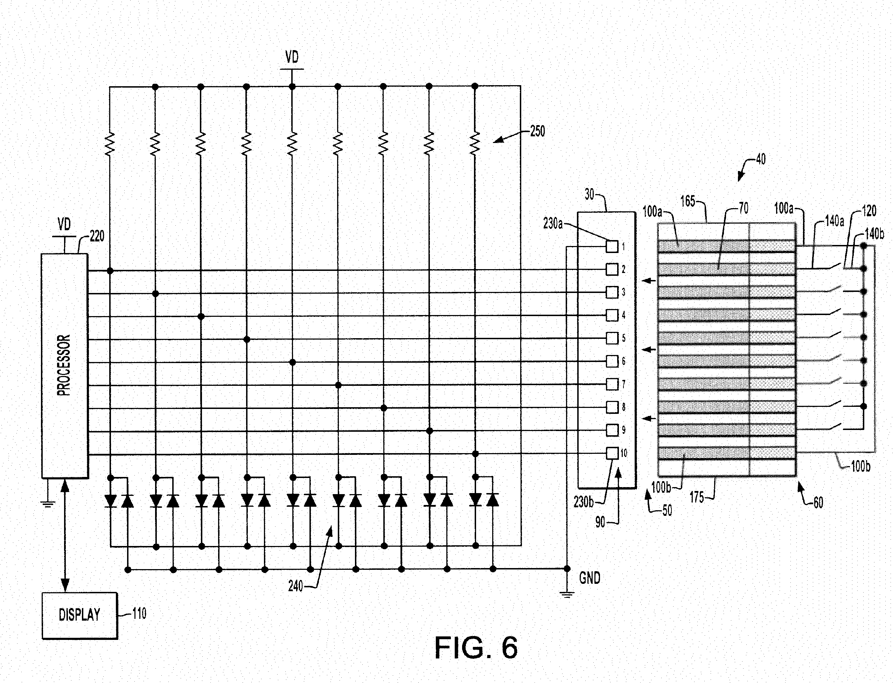

Referring initially to FIGURE 1, an exemplary connection detection assembly **10** is illustrated, which may be advantageously employed to facilitate electrical communication between a peripheral electrical devise such as a keypad **20** and a receiving unit **30.** The receiving unit **30** is preferably located on a printed circuit board (PCB) that can be within an electrical housing for an associated device such as a motor controller driver that is in operable communication with a processor **220** (FIGURE 6). However, other embodiments are contemplated herein. The connection detection assembly **10** is employed for detecting a connected state between the keypad **20** and the processor **220.**

The receiving unit **30** is configured to receive a portion of a flexible printed circuit **40.** The flexible printed circuit **40** includes a first end **50** and an opposite second end **60** that is connected to the keypad **20.** The first end **50** is operably connected to the receiving unit **30.** A plurality of electrical traces **70** are laterally spaced from one another, and longitudinally extend between the first end **50** and the second end **60** of the flexible printed circuit **40.** The plurality of electrical traces **70** are aligned along a width **80** of the flexible printed circuit **40** such that the flexible printed circuit **40** can maintain a slender and flexible profile in certain embodiments. The flexibility of the connection detection assembly **10** in certain embodiments facilitates a dependable electrical connection that is easily detachable and maintainable in an area with limited extra space.

In one embodiment, the keyboard **20** includes a display **110** for illustrating a variety of visual outputs and a plurality of individual buttons **120** that are configured to be pressed by a user to provide an input signal across the electrical button signal traces **70** of the flexible printed circuit **40.** The buttons **120** electrically function as a common switch that completes a corresponding circuit when depressed.

The receiving unit **30** is configured to receive the first end **50** of the flexible printed circuit **40** and includes a plurality of electrical contacts **90** (see FIGURES 6-8 and 10) configured to electrically couple to the plurality of electrical traces **70** along the width **80** of the flexible printed circuit **40**. The receiving unit **30** can be a zero insertion force (ZIF) connector assembly that includes a fastener for frictionally connecting the first end **50** of the flexible printed circuit **40** to the receiving unit **30** such that each of the plurality of electrical contacts **90** ideally are aligned with and contact the associated electrical trace **70**.

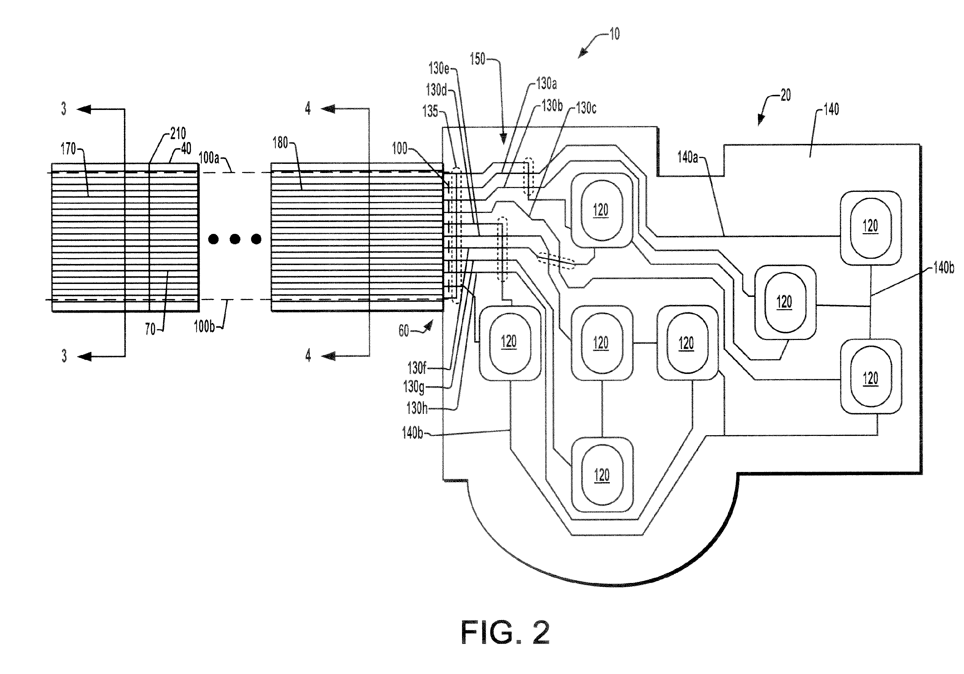

Turning to FIGURE 2, a first diagnostic electrical trace **100a** and a second diagnostic electrical trace **100b** are adapted to form a diagnostic circuit **100** with one another. In this embodiment, the first and second diagnostic electrical traces **100a, 100b** are electrically coupled to each other across the keypad **20.** However, it is also contemplated that the diagnostic electrical traces **100a, 100b** can be coupled across the flexible printed circuit **40** to complete the diagnostic circuit **100.** As illustrated by FIGURES 1 and 2, the diagnostic circuit **100** is coupled across the keypad **20** along a bridge trace **135.**

The keypad **20** includes a membrane **140** having a plurality of buttons **120** and interconnected circuitry **150** thereon. The plurality of electrical traces **70** extend from the flexible printed circuit **40** and into the membrane **140** in electrical alignment with the related circuitry **150.** The circuitry **150** is configured to electrically connect the buttons **120** on the keypad **20** with the processor **220** (FIGURE 6) through the flexible printed circuit **40.** The keypad **20** can include any desired number of buttons **120** such that the number of buttons **120** coincides with the number of button signal traces **130** provided along the flexible printed circuit **40** and related circuitry **150.** The flexible printed circuit **40** includes at least one set of additional traces **70** than the number of buttons **120** desired to electrically communicate with the processor **220** in this system. The additional traces comprise the diagnostic circuit **100**. The keypad **20** can optionally contain a "stop" button that can provide a shutoff signal to the associated motor drive that is not communicated across the flexible printed circuit.

Each button **120** in the illustrated embodiment includes a first button contact **140a** and a second button contact **140b.** The button signal traces **130** are individually electrically coupled with the first button contact **140a** of a corresponding one of the plurality of buttons **120**. In the embodiment of FIGURE 2, the keypad **20** includes eight (8) buttons **120** and therefore eight (8) button signal traces **130a, 130b**, **130c, 130d, 130e, 130f**, **130g** and **130h** are provided on the flexible printed circuit **40.** The additional first and second diagnostic electrical traces **100a, 100b** form the diagnostic circuit **100** with one another and are adapted in the illustrated embodiment to electrically couple to the second button contact **140b** of each of the plurality of buttons **120.**

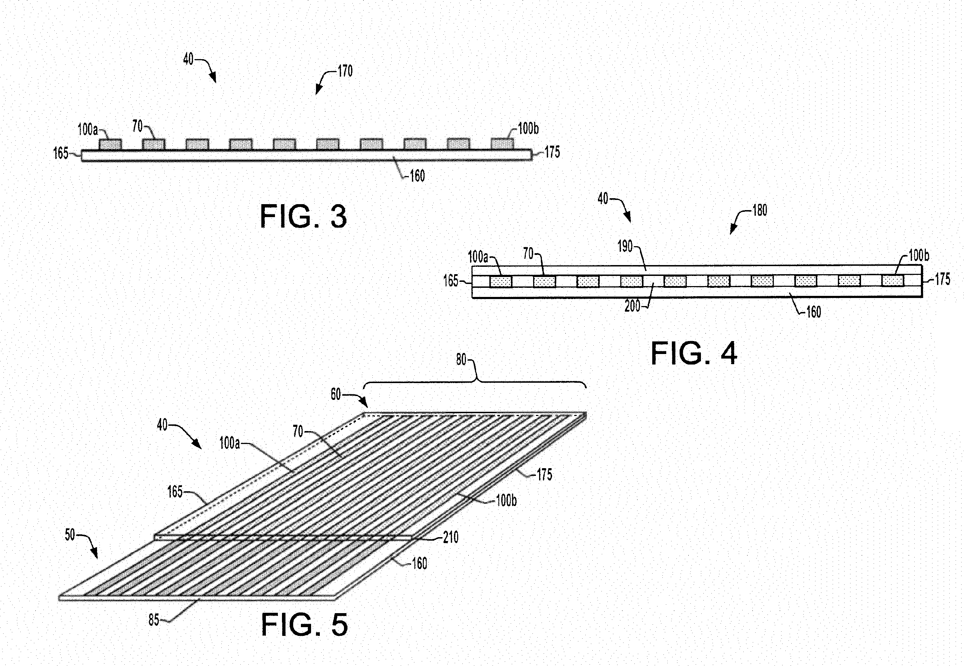

FIGURES 3-5 illustrate that the plurality of traces **70** can extend in certain embodiments along the flexible printed circuit **40** in a generally planar arrangement such that the plurality of electrical traces **70** are co-planar along the width **80** thereof. It is also contemplated that the plurality of traces **70** can include multiple rows that are stacked and separated from one another along the width **80** of the flexible printed circuit **40.** The width **80** extends between a first longitudinal edge **165** and a laterally oppositely spaced second longitudinal edge **175.** A front edge **85** extends along the first end **50** between the first longitudinal edge **165** and the second longitudinal edge **175.** In the embodiment of FIGURE 3, a cross-section of an exposed portion **170** of the electrical traces **70** opens the traces **70** to the environment and are indicated to rest along a surface of a first layer **160** of the flexible printed circuit **40.** The plurality of electrical traces **70** near the first end **50** of the flexible printed circuit **40** are at least partially coated with a carbon material in certain embodiments. The first diagnostic electrical trace **100a** can be positioned adjacent the first longitudinal edge **165** and the second diagnostic electrical trace **100b** can be adjacent to the second longitudinal edge **175.** In this embodiment, the first and second diagnostic electrical traces **100a**, **100b** are positioned along opposite sides of the flexible printed circuit **40.** However, it is contemplated that the diagnostic electrical traces **100a**, **100b** can be located at alternate locations along the width of the flexible printed circuit **40.**

In the embodiment of FIGURE 4, a covered portion **180** of the electrical traces are shielded by a second layer **190** while including a filler material **200** between each trace **70** and along the first and second longitudinal edges **166**, **175** of the flexible printed circuit **40**. Optionally, the filler material **200** can also be provided along the electrical traces **70** in the exposed portion **170** (not shown). The first layer **160,** second layer **190** and filler material **200** in certain embodiments are a flexible polymer coating for the electrical traces **70** although other materials can be used. The exposed portion **170** of the flexible printed circuit **40** is generally positioned towards the first end **50** and the covered portion **180** is positioned towards the second end **60.** As illustrated by FIGURES 1, 2 and 5, the exposed portion and the covered portion are separated by line **210** along the flexible printed circuit **40** and line **210** can be located at any position thereon.

FIGURE 6 schematically illustrates the processor **220** as it is electrically connected to the receiving unit **30** that can be electrically coupled to the flexible printed circuit **40** and the plurality of traces **70** thereon. Any form of electronic processing component **220** can be used, including without limitation microprocessors, microcontrollers, digital signal processors, programmable logic, dedicated logic circuits, etc., or combinations thereof. The receiving unit **30** includes a plurality of electrical contacts **90** such as pins that align with the plurality of traces **70** along the width **80** of the flexible printed circuit **40.** The receiving unit **30** includes diagnostic electrical contacts **230a, 230b** to align with the diagnostic traces **100a, 100b** such that electrical contact **230a** is electrically coupled with electrical contact **230b** when the flexible printed circuit **40** is coupled to the receiving unit **30.** Additionally, FIGURE 6 illustrates the flexible printed circuit **40** as the front edge **85** is being inserted into the receiving unit **30** to electrically connect the electrical traces **70** with the electrical contacts **90.**

Also provided in the illustrated embodiment are plurality of blocking diodes **240** that are electrically connected to the receiving unit **30** to provide protection to the connection detector assembly **10** from electrostatic discharge, although the diodes **240** can be omitted in certain embodiments. Pull-up resistors **250** are also provided to assist with signal differentiation by the processor **220** between a ground voltage **GND** and a supply voltage **VD**.

The processor **220** in certain embodiments is configured to perform a diagnostic check of the diagnostic circuit **100** to determine the integrity of a connected state between the first end **50** of the flexible printed circuits **40** and the receiving unit **30** or between the second end **60** of the flexible printed circuit **40** and the keypad **20.** The processor performs the diagnostic check on the connected state between the plurality of traces **70** along the width **80** of the first end **50** of the flexible printed circuit **40** and the electrical contacts **90** of the receiving unit **30.** The processor **220** can be configured to perform the diagnostic check at predetermined intervals (e.g., once a hour or day) or at any other time desired by the user, and the diagnostic check may be performed in response to a user signal or message in certain embodiments, thereby facilitating quick troubleshooting. The processor **220** in certain embodiments, moreover, can detect connection failure upon a "power up" stage of the associated motor drive and can send a report to a third party if a fault is detected. The connected state of the flexible printed circuit **40** indicates whether or not a failure condition exists along the diagnostic circuit **100.** As the first end **50** of the flexible printed circuit **40** is inserted into the receiving unit **30,** a ground voltage **GND** is electrically coupled with the first diagnostic electrical trace **100a** and a power supply voltage **VD** is electrically coupled via the corresponding pull-up resistor **250** to the second diagnostic electrical trace **100b.** When the diagnostic check is performed, electrical contact **230a** is pulled low to the ground voltage **GND** and electrical contact **230b** is pulled high via the pull-up resistor **250** to the power supply voltage **VD.** The processor **220** monitors the voltage level of the diagnostic circuit **100** at the electrical contact **230b** to determine if the connection state includes a failure condition between the receiving unit **30** and the flexible printed circuit **40.**

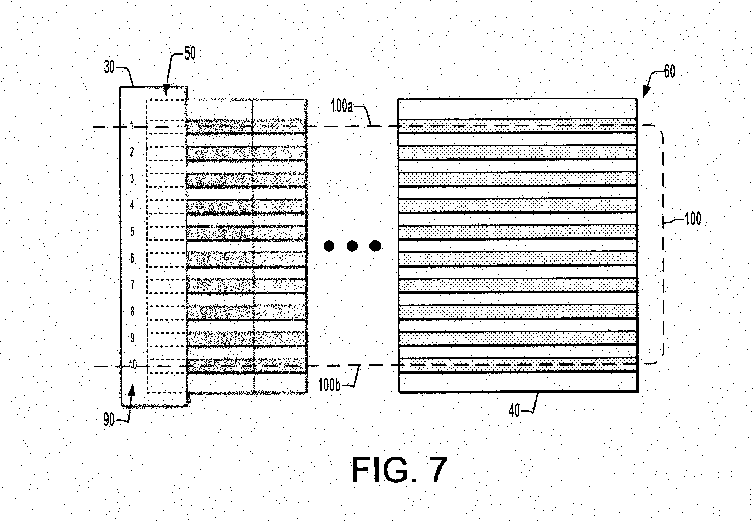

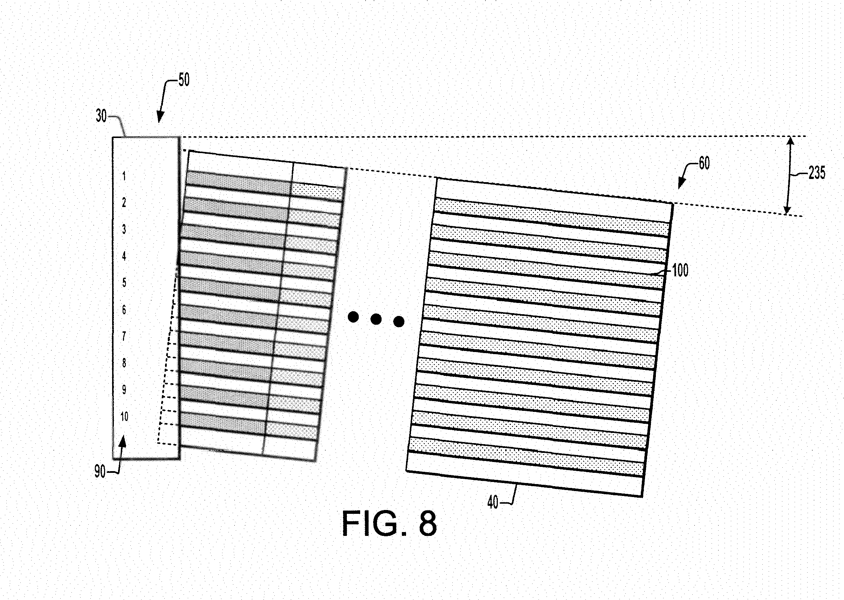

When the processor **220** identifies voltage at electrical contact **230b** to be low, then the connected state between the flexible printed circuit **40** and the receiving unit **30** is in a normal condition and electrical connection is sufficient (such as in FIGURE 7). When the processor **220** identifies the voltage across the electrical contact **230b** to be high, then the connected state is in a failure condition and the electrical connection is not sufficient. A failure condition could indicate that the flexible printed circuit **40** is not fully electrically connected to the receiving unit **30** or is merely connected at an angle (such as in FIGURE 8). Also, the failure condition could indicate the existence of material degradation or failure of the flexible printed circuit **40** and diagnostic circuit **100** thereof.

FIGURE 7 illustrates one embodiment of the present system wherein the flexible printed circuit **40** is electrically coupled to the receiving unit **30.** The flexible printed circuit **40** is inserted into the receiving unit **30** such that the plurality of electrical contacts **90** are aligned with and in contact with the plurality of electrical traces **70.** This configuration allows the diagnostic electrical traces **100a, 100b** to form the diagnostic circuit **100** such that as the processor conducts the diagnostic check, the connection status is considered normal.

FIGURE 8 illustrates the flexible printed circuit **40** that has been at least partially separated from the receiving unit **30.** The front edge **85** is partially inserted in the receiving unit **30** such that the first diagnostic trace **100a** is not in electronic communication with the first electric contact **230a** while the second diagnostic trace **100b** is in electronic communication with the second electric contact **230b.** This happens when the flexible printed circuit **40** partially disengages from the receiving unit **30** and is slanted away from proper alignment by at least a minimum angle **235.** Here, at least one of the button signal traces **130a-130h** of the plurality of electrical traces **70** are not electrically communicating with the respective electric contacts **90** of the receiving unit **30** Therefore, the keypad **20** cannot properly transmit one or more corresponding input signals to the processor **220.** Once this condition is identified by the processor **220,** the processor **220** transmits a signal to the display **110** to indicate the existence of a failed connection, and may be programmed to take one or more other actions in response to this detected condition.

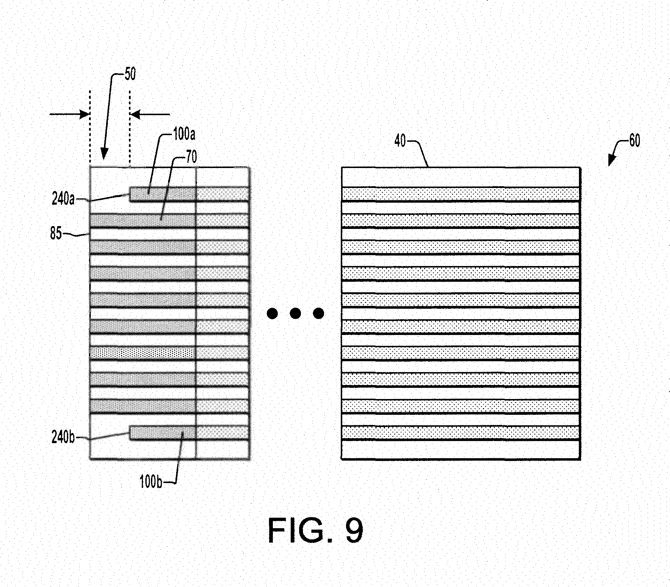

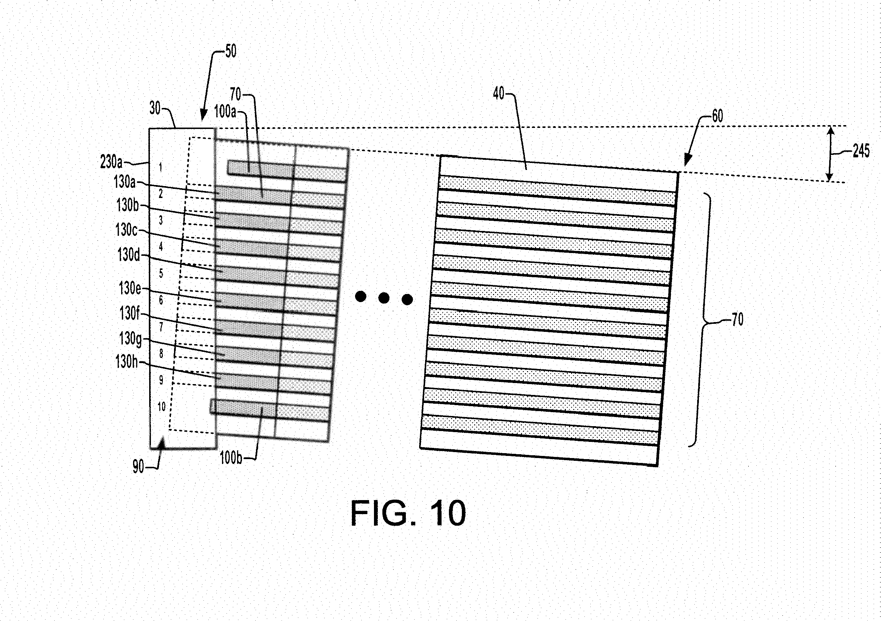

FIGURE 9 illustrates another embodiment of the connection detector assembly **10** wherein the first and second diagnostic traces **100a**, **100b** of the flexible printed circuit **40** have a similar first length such that edges **240a, 240b** of the diagnostic traces **100a, 100b** are spaced from the first edge **85** of the flexible printed circuit **40**. The remainder of the plurality of electrical traces **70** include a similar second length such that the second length is greater than the first length of diagnostic traces **100a, 100b.** The remainder of the plurality of electrical traces **70** can extend up to the first edge **85** of the flexible printed circuit **40.** The difference in length allows the assembly **10** to properly identify when the flexible printed circuit 40 is partially slanted away from proper alignment while the plurality of electrical button traces **130a-130h** remain in electronic communication with the respective electrical contacts **90.** In this embodiment, as shown in FIGURE 10, the processor **220** can identify an improper connection due to a partially slanted flexible printed circuit at a second minimum angle **245** which is less than the first minimum angle **235** of FIGURE 8. Here, the diagnostic circuit **100** has been interrupted as the first diagnostic trace **100a** is separated from electrical contact **230a** while each remaining electrical traces **70** are in electrical communication with the receiving unit **30.** By this embodiment, therefore, the system can detect misalignment prior to disruption in actual switch connections, thereby facilitating proactive maintenance.

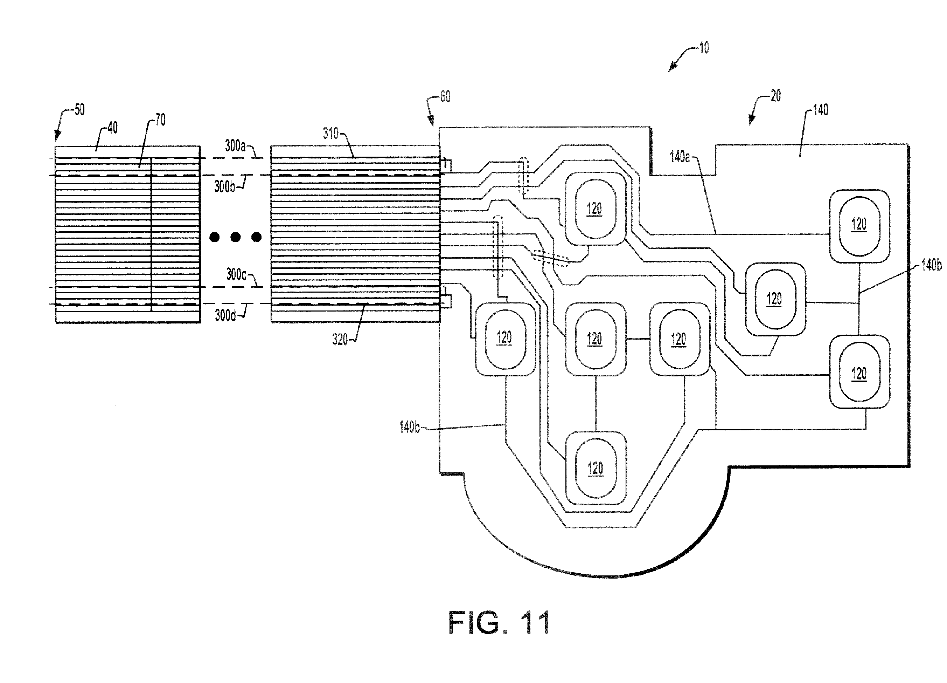

Turning to FIGURE 11, wherein similar reference numbers represent similar features, a separate embodiment of the flexible printed circuit **40** of the connection detector assembly **10** includes a third diagnostic electrical trace **300c** and a fourth diagnostic electrical trace **300d** that extend between the first end **50** and the second end **60** of the flexible printed circuit **40.** The third and fourth diagnostic electrical traces **300c, 300d** are electrically coupled to each other across either the keypad **20** or along the flexible printed circuit **40** to complete another diagnostic circuit **320** that is spaced from the diagnostic circuit **310.** The first and second diagnostic electrical traces **300a, 300b** are also electrically coupled to each other to complete diagnostic circuit **310** across the keypad **20**. The processor is configured to perform the diagnostic check on the connected state between the plurality of traces **70** along the width **80** of the first end **50** of the flexible circuit and the electrical contacts **90** of the receiving unit **30.**

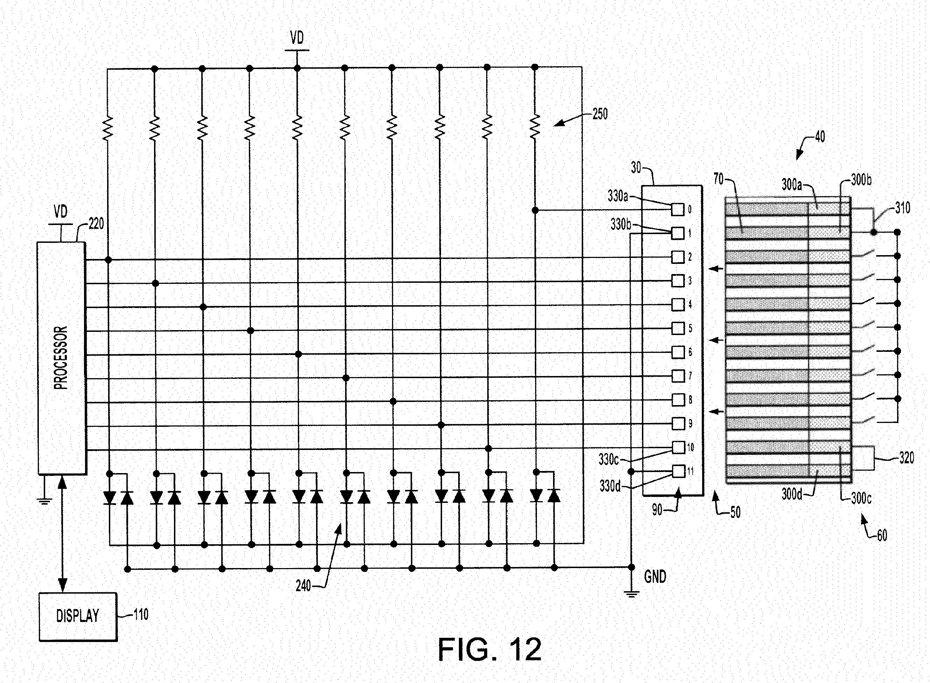

In this embodiment, as illustrated by the schematics of FIGURE 12, the power supply voltage **VD** is electrically coupled with the first and third diagnostic electrical traces **300a**, **300c** and the ground voltage **GND** is electrically coupled to the second and fourth diagnostic electrical traces **300b, 300d.** The processor **220** compares the voltage difference across the diagnostic circuits **310** and **320** to determine if the connection state includes a failure condition between the receiving unit **30** and the flexible printed circuit **40.**

Diagnostic circuit **310** extends along the first longitudinal edge **165** while the diagnostic circuit **320** extends along the second longitudinal edge **175.** The first diagnostic electrical trace **300a** and a second diagnostic electrical trace **300b** are positioned adjacent the first longitudinal edge **165.** The third electrical trace **300c** and a fourth electrical trace **300d** are positioned adjacent the second longitudinal edge **175.** In this configuration, each diagnostic circuit **310, 320** on opposite sides along the width **80** of the flexible printed circuit **40** to assist with the diagnostic check. However, it is contemplated that the diagnostic electrical circuits **310** and **320** can be located at any alternate location along the width **80** of the flexible printed circuit **40.**

The receiving unit **30** of this configuration includes diagnostic electrical contacts **330a, 330b, 330c** and **330d** to align with the diagnostic traces **300a-300d** such that electrical contact **330a** is electrically coupled with electrical contact **330b** and electrical contact **330c** is electrically coupled with electrical contact **330d** when the flexible printed circuit **40** is coupled to the receiving unit **30.**

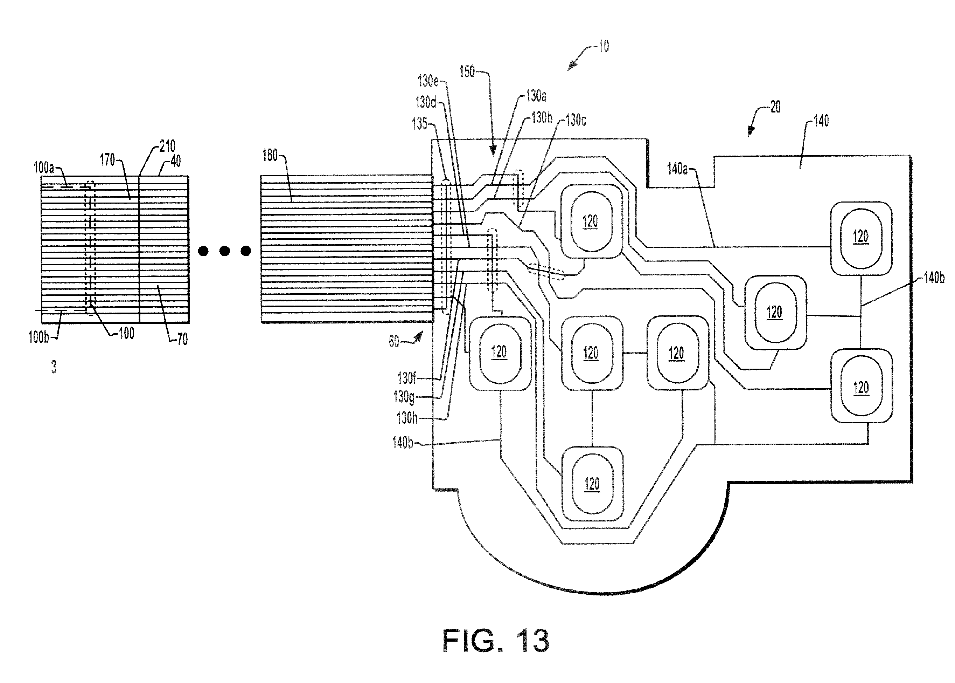

FIGURE 13 illustrates an additional embodiment of the connection detector assembly **10.** The diagnostic traces **100a, 100b** are configured such that completion of the diagnostic circuit **100** is along the flexible printed circuit **40.** The first and second diagnostic traces **100a**, **100b** are electrically connected over the button signal traces **130a-130h** on the flexible printed circuit **40** by a bridge path **340**. This embodiment includes a diagnostic circuit **100** having shortened diagnostic traces **100a, 100b** which reduces the amount of electromagnetic interference and improves the electromagnetic compatibility of the system. The presence of electrical noise generated either internally or externally by other systems has a reduced effect on the diagnostic circuit **100** thereby increasing the reliability of the assembly.

The above examples are merely illustrative of several possible embodiments of various aspects of the present disclosure, where equivalent alterations and/or modifications will occur to others skilled in the art upon reading and understanding this specification and the annexed drawings. In particular, although a particular feature of the disclosure may have been illustrated and/or described with respect to only one of several implementations, such feature may be combined with one or more other features of the other implementations as may be desired and advantageous for any given or particular application. Also, to the extent that the terms "including", "includes", "having", "has", "with", or variants thereof are used in the detailed description and/or in the claims, such terms are intended to be inclusive in a manner similar to the term "comprising".

### The following is a list of further preferred embodiments of the invention:

Embodiment 1: A connection detector assembly for detecting a connected state between a keypad and a processor, comprising:
   a keypad including a plurality of buttons, the individual buttons including first and second button contacts;
   a flexible printed circuit having a first end, an opposite second end connected to the keypad, a plurality of electrical traces spaced from one another and longitudinally extending between the first end and the second end of the flexible printed circuit, the plurality of electrical traces being aligned along a width of the flexible printed circuit and including a set of two or more button signal traces individually electrically coupled with a first button contact of a corresponding one of the plurality of buttons, and first and second diagnostic electrical traces forming a diagnostic circuit with one another;
   a receiving unit configured to receive the first end of the flexible printed circuit and having a plurality of electrical contacts configured to electrically couple to the plurality of electrical traces along the width of the flexible printed circuit, the plurality of electrical contacts including one or more diagnostic electrical contacts configured to electrically couple to the at least one diagnostic trace; and
   a processor electrically coupled to the one or more diagnostic electrical contacts of the receiving unit, the processor being configured to perform a diagnostic check of the diagnostic circuit to determine a connected state between the first end of the flexible printed circuit and the receiving unit or between the second end of the flexible printed circuit and the keypad, the connected state indicating whether or not a failure condition exists along a designated portion of the diagnostic circuit.
Embodiment 2: The connection detector assembly of embodiment 1, wherein the flexible printed circuit includes a generally planar arrangement and the plurality of electrical traces are co-planar along the width of the flexible printed circuit.
Embodiment 3: The connection detector assembly of embodiment 1, wherein the first and second diagnostic electrical traces are electrically coupled to each other across one of the keypad and the flexible printed circuit to complete the diagnostic circuit.
Embodiment 4: The connection detector assembly of embodiment 3, wherein the diagnostic circuit further comprises:
   a ground voltage electrically coupled with the first diagnostic electrical trace and a power supply voltage electrically coupled to the second diagnostic electrical trace,
   wherein the processor compares a voltage difference across the diagnostic circuit to determine if the connection state includes a failure condition between the receiving unit and the flexible printed circuit.
Embodiment 5: The connection detector assembly of embodiment 3, wherein the first and second diagnostic electrical traces are electrically coupled to each other across the keypad such that the processor performs the diagnostic check on the connected state between the plurality of traces along the width of the first end of the flexible printed circuit and the electrical contacts of the receiving unit.
Embodiment 6: The connection detector assembly of embodiment 3, wherein the diagnostic circuit further comprises:
   a third diagnostic electrical trace and a fourth diagnostic electrical trace extending between the first end and the second end of the flexible printed circuit such that the third and fourth diagnostic electrical traces are electrically coupled to each other across one of the keypad and the flexible printed circuit to complete the diagnostic circuit.
Embodiment 7: The connection detector assembly of embodiment 6, wherein the first and second diagnostic electrical traces are electrically coupled to each other across the keypad and the third and fourth diagnostic electrical traces are electrically coupled to each other across the keypad such that the processor performs the diagnostic check on the connected state between the plurality of traces along the width of the first end of the flexible circuit and the electrical contacts of the receiving unit.
Embodiment 8: The connection detector assembly of embodiment 6, wherein the diagnostic circuit further comprises:
   a ground voltage electrically coupled with the first and third diagnostic electrical traces and a power supply voltage being electrically coupled to the second and fourth diagnostic electrical traces,
   wherein the processor compares a voltage difference across the diagnostic circuit to determine if the connection state includes a failure condition between the receiving unit and the flexible printed circuit.
Embodiment 9: The connection detector assembly of embodiment 1, wherein the flexible printed circuit includes a generally planar arrangement such that the width of the flexible printed circuit extends between a first longitudinal edge and an oppositely spaced second longitudinal edge.
Embodiment 10: The connection detector assembly of embodiment 9, wherein the first diagnostic electrical trace is positioned adjacent the first longitudinal edge and the second diagnostic electrical trace is positioned adjacent the second longitudinal edge, the first and second diagnostic electrical traces are electrically coupled to each other across one of the flexible printed circuit and the receiving unit.
Embodiment 11: The connection detector assembly of embodiment 10, wherein the first and second diagnostic electrical traces of the plurality of electrical traces have a similar first length and the remainder of the plurality of electrical traces have a similar second length such that the first length is less than the second length.
Embodiment 12: The connection detector assembly of embodiment 10, wherein the first and second diagnostic electrical traces are electrically coupled to each other across the keypad such that the processor performs the diagnostic check on the connected state between the plurality of traces along the width of the first end of the flexible circuit and the electrical contacts of the receiving unit.
Embodiment 13: The connection detector assembly of embodiment 10, wherein the diagnostic circuit further comprises:
   a ground voltage electrically coupled with the first diagnostic electrical trace and a power supply voltage being electrically coupled to the second diagnostic electrical trace,
   wherein the processor compares a voltage difference across the diagnostic circuit to determine if the connection state includes a failure condition between the receiving unit and the flexible printed circuit.
Embodiment 14: The connection detector assembly of embodiment 9, wherein the diagnostic circuit further comprises:
   a first diagnostic electrical trace and a second diagnostic electrical trace positioned adjacent the first longitudinal edge, the first and second electrical traces are electrically coupled across one of the keypad and the receiving unit; and
   a third electrical trace and a fourth electrical trace positioned adjacent the second longitudinal edge, the third and fourth electrical traces are electrically coupled across one of the keypad and the receiving unit,
   wherein the processor is adapted to perform the diagnostic check on the connected state between the first end of the flexible printed circuit and the receiving unit or the second end of the flexible printed circuit and the keypad.
Embodiment 15: The connection detector assembly of embodiment 14, wherein the first and second electrical traces are electrically coupled to each other across the keypad and the third and fourth electrical traces are electrically coupled to each other across the keypad such that the processor performs the diagnostic check on the connected state between the plurality of traces along the width of the first end of the flexible circuit and the electrical contacts of the receiving unit.
Embodiment 16: The connection detector assembly of embodiment 14, wherein the diagnostic circuit further comprises:
   a power supply voltage electrically coupled with the first and third electrical traces and a ground voltage being electrically coupled to the second and fourth electrical traces,
   wherein the processor compares a voltage difference across the diagnostic circuit to determine if the connection state includes a failure condition between the receiving unit and the flexible printed circuit.
Embodiment 17: The connection detector assembly of embodiment 1, wherein the receiving unit is a zero insertion force connector assembly that includes a fastener for frictionally connecting the first end of the flexible printed circuit to the receiving unit such that each electrical contact of the receiving unit is aligned with and contacts an associated electrical trace.
Embodiment 18: The connection detector assembly of embodiment 1, wherein flexible printed circuit includes a polymer coating between the first end and the second end.
Embodiment 19: The connection detector assembly of embodiment 1, wherein the plurality of electrical traces at the first end of the flexible printed circuit are at least partially coated with a carbon material.
Embodiment 20: A keypad assembly, comprising:
   a keypad including a plurality of buttons, the individual buttons including first and second button contacts; and
   a flexible printed circuit having a first end, an opposite second end connected to the keypad, a plurality of electrical traces spaced from one another and longitudinally extending between the first end and the second end of the flexible printed circuit, the plurality of electrical traces being aligned along a width of the flexible printed circuit and including a set of two or more button signal traces individually electrically coupled with a first button contact of a corresponding one of the plurality of buttons, and first and second diagnostic electrical traces forming a diagnostic circuit with one another.

## Claims

1. A connection detector assembly for detecting a connected state between a keypad and a processor, comprising:
a keypad including a plurality of buttons, the individual buttons including first and second button contacts;
a flexible printed circuit having a first end, an opposite second end connected to the keypad, a plurality of electrical traces spaced from one another and longitudinally extending between the first end and the second end of the flexible printed circuit, the plurality of electrical traces being aligned along a width of the flexible printed circuit and including a set of two or more button signal traces individually electrically coupled with a first button contact of a corresponding one of the plurality of buttons, and first and second diagnostic electrical traces forming a diagnostic circuit with one another;
a receiving unit configured to receive the first end of the flexible printed circuit and having a plurality of electrical contacts configured to electrically couple to the plurality of electrical traces along the width of the flexible printed circuit, the plurality of electrical contacts including one or more diagnostic electrical contacts configured to electrically couple to the at least one diagnostic trace; and
a processor electrically coupled to the one or more diagnostic electrical contacts of the receiving unit, the processor being configured to perform a diagnostic check of the diagnostic circuit to determine a connected state between the first end of the flexible printed circuit and the receiving unit or between the second end of the flexible printed circuit and the keypad, the connected state indicating whether or not a failure condition exists along a designated portion of the diagnostic circuit.

2. The connection detector assembly of claim 1, wherein the flexible printed circuit includes a generally planar arrangement and the plurality of electrical traces are co-planar along the width of the flexible printed circuit.

3. The connection detector assembly of claim 1 or 2, wherein the first and second diagnostic electrical traces are electrically coupled to each other across one of the keypad and the flexible printed circuit to complete the diagnostic circuit.

4. The connection detector assembly of claim 3, wherein the diagnostic circuit further comprises:
a ground voltage electrically coupled with the first diagnostic electrical trace and a power supply voltage electrically coupled to the second diagnostic electrical trace,
wherein the processor compares a voltage difference across the diagnostic circuit to determine if the connection state includes a failure condition between the receiving unit and the flexible printed circuit.

5. The connection detector assembly of claim 3, wherein the first and second diagnostic electrical traces are electrically coupled to each other across the keypad such that the processor performs the diagnostic check on the connected state between the plurality of traces along the width of the first end of the flexible printed circuit and the electrical contacts of the receiving unit.

6. The connection detector assembly of claim 3, wherein the diagnostic circuit further comprises:
a third diagnostic electrical trace and a fourth diagnostic electrical trace extending between the first end and the second end of the flexible printed circuit such that the third and fourth diagnostic electrical traces are electrically coupled to each other across one of the keypad and the flexible printed circuit to complete the diagnostic circuit; and/or
wherein the first and second diagnostic electrical traces are electrically coupled to each other across the keypad and the third and fourth diagnostic electrical traces are electrically coupled to each other across the keypad such that the processor performs the diagnostic check on the connected state between the plurality of traces along the width of the first end of the flexible circuit and the electrical contacts of the receiving unit.

7. The connection detector assembly of claim 6, wherein the diagnostic circuit further comprises:
a ground voltage electrically coupled with the first and third diagnostic electrical traces and a power supply voltage being electrically coupled to the second and fourth diagnostic electrical traces,
wherein the processor compares a voltage difference across the diagnostic circuit to determine if the connection state includes a failure condition between the receiving unit and the flexible printed circuit.

8. The connection detector assembly of any one of claims 1 to 7, wherein the flexible printed circuit includes a generally planar arrangement such that the width of the flexible printed circuit extends between a first longitudinal edge and an oppositely spaced second longitudinal edge; and/or
wherein the first diagnostic electrical trace is positioned adjacent the first longitudinal edge and the second diagnostic electrical trace is positioned adjacent the second longitudinal edge, the first and second diagnostic electrical traces are electrically coupled to each other across one of the flexible printed circuit and the receiving unit.

9. The connection detector assembly of dais 8, wherein the first and second diagnostic electrical traces of the plurality of electrical traces have a similar first length and the remainder of the plurality of electrical traces have a similar second length such that the first length is less than the second length; or
wherein the first and second diagnostic electrical traces are electrically coupled to each other across the keypad such that the processor performs the diagnostic check on the connected state between the plurality of traces along the width of the first end of the flexible circuit and the electrical contacts of the receiving unit.

10. The connection detector assembly of claim 8, wherein the diagnostic circuit further comprises:
a ground voltage electrically coupled with the first diagnostic electrical trace and a power supply voltage being electrically coupled to the second diagnostic electrical trace,
wherein the processor compares a voltage difference across the diagnostic circuit to determine if the connection state includes a failure condition between the receiving unit and the flexible printed circuit.

11. The connection detector assembly of claim 8, wherein the diagnostic circuit further comprises:
a first diagnostic electrical trace and a second diagnostic electrical trace positioned adjacent the first longitudinal edge, the first and second electrical traces are electrically coupled across one of the keypad and the receiving unit; and
a third electrical trace and a fourth electrical trace positioned adjacent the second longitudinal edge, the third and fourth electrical traces are electrically coupled across one of the keypad and the receiving unit,
wherein the processor is adapted to perform the diagnostic check on the connected state between the first end of the flexible printed circuit and the receiving unit or the second end of the flexible printed circuit and the keypad.

12. The connection detector assembly of claim 11, wherein the first and second electrical traces are electrically coupled to each other across the keypad and the third and fourth electrical traces are electrically coupled to each other across the keypad such that the processor performs the diagnostic check on the connected state between the plurality of traces along the width of the first end of the flexible circuit and the electrical contacts of the receiving unit; or
wherein the diagnostic circuit further comprises:
a power supply voltage electrically coupled with the first and third electrical traces and a ground voltage being electrically coupled to the second and fourth electrical traces,
wherein the processor compares a voltage difference across the diagnostic circuit to determine if the connection state includes a failure condition between the receiving unit and the flexible printed circuit.

13. The connection detector assembly of any one of claims 1 to 12, wherein the receiving unit is a zero insertion force connector assembly that includes a fastener for frictionally connecting the first end of the flexible printed circuit to the receiving unit such that each electrical contact of the receiving unit is aligned with and contacts an associated electrical trace.

14. The connection detector assembly of any one of claims 1 to 13, wherein flexible printed circuit includes a polymer coating between the first end and the second end; or
wherein the plurality of electrical traces at the first end of the flexible printed circuit are at least partially coated with a carbon material.

15. A keypad assembly, comprising:
a keypad including a plurality of buttons, the individual buttons including first and second button contacts; and
a flexible printed circuit having a first end, an opposite second end connected to the keypad, a plurality of electrical traces spaced from one another and longitudinally extending between the first end and the second end of the flexible printed circuit, the plurality of electrical traces being aligned along a width of the flexible printed circuit and including a set of two or more button signal traces individually electrically coupled with a first button contact of a corresponding one of the plurality of buttons, and first and second diagnostic electrical traces forming a diagnostic circuit with one another.
